Europäisches Patentamt

European Patent Office

Office européen des brevets

(11) Veröffentlichungsnummer : **0 344 455 B1**

(12) **EUROPÄISCHE PATENTSCHRIFT**

(45) Veröffentlichungstag der Patentschrift :
**15.04.92 Patentblatt 92/16**

(51) Int. Cl.⁵ : **B60T 8/44**

(21) Anmeldenummer : **89107367.8**

(22) Anmeldetag : **24.04.89**

(54) **Schlupfgeregelte Bremsanlage mit einem Hauptbremszylinder.**

(30) Priorität : **01.06.88 DE 3818707**

(43) Veröffentlichungstag der Anmeldung :
**06.12.89 Patentblatt 89/49**

(45) Bekanntmachung des Hinweises auf die
Patenterteilung :
**15.04.92 Patentblatt 92/16**

(84) Benannte Vertragsstaaten :
**DE ES FR GB**

(56) Entgegenhaltungen :
**DE-A- 2 450 874**
**DE-A- 3 622 556**
**DE-A- 3 629 564**
**DE-A- 3 726 302**

(73) Patentinhaber : **ALFRED TEVES GMBH**
**Guerickestrasse 7**
**W-6000 Frankfurt/Main 90 (DE)**

(72) Erfinder : **Burgdorf, Jochen**
**Neugasse 11**
**W-6050 Offenbach-Rumpenheim (DE)**
Erfinder : **Reinartz, Hans-Dieter**
**In der Römerstadt 169**
**W-6000 Frankfurt/M. 50 (DE)**
Erfinder : **Steffes, Helmut**
**Am See 22**
**W-6234 Hattersheim 3 (DE)**

(74) Vertreter : **Grau, Ulf**
**c/o ALFRED TEVES GMBH Guerickestrasse 7**
**W-6000 Frankfurt (M) 90 (DE)**

EP 0 344 455 B1

## Beschreibung

Die Erfindung bezieht sich auf eine schlupfgeregelte Bremsanlage wie sie in dem Oberbegriff des Anspruchs 1 beschrieben ist (DE-A-3726 302).

Eine derartige Bremsanlage hat den Vorteil, daß der Hauptbremszylinder während einer Bremsschlupfregelung nicht von den Radbremsen abgekoppelt wird. Das Volumen im Hauptbremszylinder steht daher als Zusatzvolumen zur Verfügung, wenn die Förderleistung der Pumpe während einer Bremsschlupfregelung momentan nicht ausreichen sollte. Durch die Ansteuerung des Sperrventils durch den Hauptbremszylinderkolben, wird gleichzeitig eine Pedalpositionierung bewirkt. Mittels einer Rampe am Arbeitskolben des Hauptbremszylinders wird das Sperrventil betätigt. Die Rampe ist so angeordnet, daß das Sperrventil in einer Schließposition ist, wenn der Arbeitskolben weit in den Hauptbremszylinder hineingeschoben ist. Die Druckmittelverbindung, die von dem Sperrventil kontrolliert wird, ist geöffnet, wenn der Arbeitskolben sich in einer Position befindet, die nur wenig verschieden ist von der Grundposition.

Durch diese Schaltung wird bewirkt, daß während einer Bremsschlupfregelung, d.h. bei eingeschalteter Pumpe, der Arbeitskolben und damit das Pedal in eine Position gestellt wird, die dem Übergang zwischen den beiden genannten Bereichen entspricht.

Das Sperrventil ist so ausgebildet, daß der Schließkörper von einem rampengesteuerten Stößel gegen den Pumpendruck aufgestoßen werden kann. Auf den Stößel, der sich an der Mantelfläche des Arbeitskolbens abstützt, wirkt daher der volle Pumpendruck. Der Druck bewirkt dabei eine Reibungskraft zwischen dem Stößel und der Mantelfläche des Arbeitskolbens, der diesen in seiner axialen Bewegung behindert. Dies muß gerade während einer Schlupfregelung vermieden werden, da das Zusatzvolumen, das im Hauptbremszylinder entnommen werden soll, der Radbremse sehr rasch zugeführt werden muß. Eine verlangsamte Druckmittelzufuhr, würde die Regelgüte negativ beeinflussen.

Der Druck des Stößels auf die Mantelfläche sowie die schnellen Bewegungen des Kolbens während einer Bremsschlupfregelung führen zu Zerstörungen im Bereich der Steuerrampe. Die Dauerhaltbarkeit des Materials ist daher bald erschöpft. Diesem Nachteil könnte allenfalls dadurch begegnet werden, indem aufwendige und teure Härtungsmaßnahmen durchgeführt werden.

Die Erfindung beruht daher auf der Aufgabe die bekannte Bremsanlage so zu ändern, daß zwar deren Vorteile erhalten bleiben (Speicherwirkung des Hauptbremszylinders, Pedalpositionierung), andererseits aber die Dauerbelastbarkeit erhöht wird, ohne daß dazu aufwendige Härtungsmaßnahmen ergriffen werden müssen.

Ein weiterer Nachteil der Bremsanlage gemäß dem Hauptpatent besteht darin, daß das Sperrventil an eine übliche Hauptbremszylinderkonstruktion angesetzt werden muß, so daß eine Neukonstruktion des Hauptbremszylinders notwendig wird. Es ist daher ein weiteres Ziel der Aufgabe, ein Konzept zu erfinden, die es ermöglicht, die gewünschten Funktionen in einem Zusatzaggregat zu verkörperlichen, das an den üblicherweise eingesetzten Hauptbremszylindern angeschlossen werden kann.

Die gestellte Aufgabe wird dadurch gelöst, daß der Arbeitskolben des Hauptbremszylinders aus einem Kolben und einem Übertragungskolben besteht, wobei zwischen den Kolben ein hydraulisches Druckpolster ausgebildet ist, und daß der Schließkörper des Sperrventils im schließenden Sinne vom Druck im Druckpolster und im öffnenden Sinne vom Druck am Ausgang der Pumpe beaufschlagt ist.

Auf diese Weise wird erreicht, daß der Schließkörper des Sperrventils im wesentliche druckausgeglichen ist, so daß keine Kräfte auf den Arbeitskolben übertragen werden. Da die Pumpe nur während einer Bremsschlupfregelung eingeschaltet ist, lastet während einer konventionellen Bremsung, d.h. bei einer Bremsung ohne Bremsschlupfregelung der Druck des Druckpolsters auf den Stößel. Dies ist aber als nicht so kritisch zu betrachten, da während einer konventionellen Bremsung der Kolben nur einmal hin- und herfährt. In der für die Haltbarkeit des Materials kritischen Phase von vielen kleinen Hüben des Kolbens während einer Bremsschlupfregelung wird keine Druckkraft auf den Stößel übertragen.

Das Sperrventil kann sowohl vom Kolben als auch vom Übertragungskolben betätigt werden. Um aber ein Zusatzaggregat zu schaffen, wird vorgeschlagen, daß das Sperrventil vom Übertragungskolben betätigt wird. Übertragungskolben und Sperrventil bilden eine Einheit, die an bestehende Hauptbremszylindersysteme z.B. über eine Leitung angeschlossen werden kann.

Um die Drücke am Sperrventil beeinflussen zu können, so daß auf dem Stößel keine Kraft lastet, wird vorgeschlagen, den Übertragungskolben als Stufenkolben auszubilden, so daß im Druckpolster ein anderer Druck herrscht, als im Ausgang der Pumpe.

Der Arbeitsraum vor dem Übertragungskolben, muß in der Grundstellung des Übertragungskolbens an einem Vorratsbehälter angeschlossen werden. Dies kann mit einer Schnüffellochbohrung realisiert werden. Ein anderer vorteilhafter Vorschlag sieht vor, daß der Übertragungskolben eine Längsbohrung erhält, die ein sperrbares Rückschlagventil aufweist. In der Bohrung ist ein Stößel geführt, der mit einer Membran verbunden ist, wobei die Membran auf der einen Seite in das Druckpolster auf der anderen Seite an einen Vorratsbehälter anschließt.

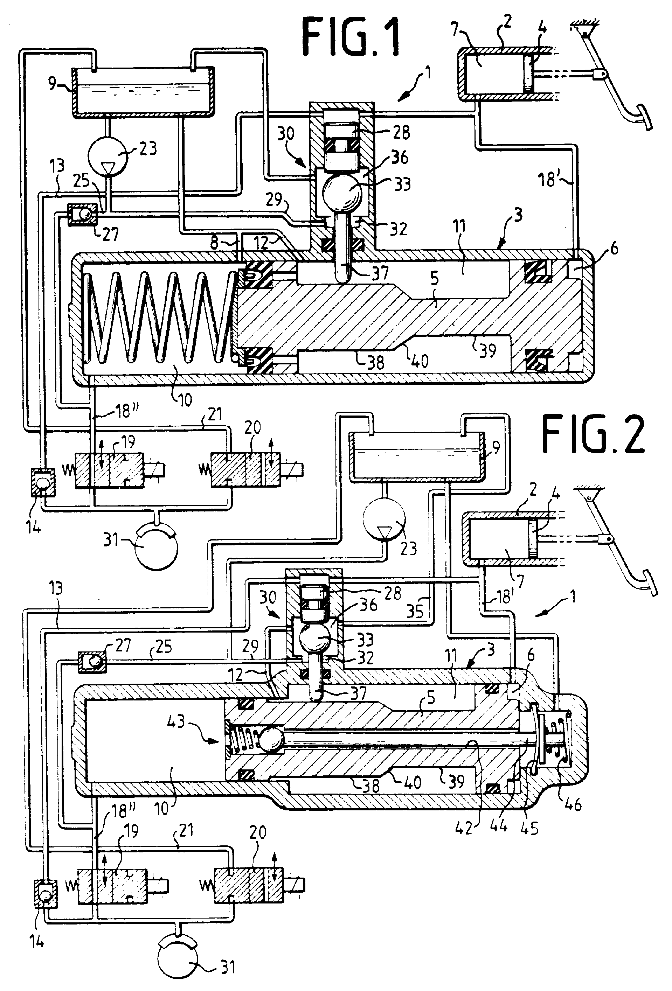

An Hand zweier Ausführungsbeispiele (Fig. 1 und Fig. 2) soll der Erfindungsgedanke näher verdeutlicht werden.

Die gezeigten Ausführungsbeispiele sind weitgehend identisch. Ein Unterschied besteht in der Vorrichtung zur Herstellung einer Druckmittelverbindung zwischen dem Arbeitsraum 10 und dem Vorratsbehälter 9 in der Grundstellung des Übertragungskolbens 5. Ein weiterer Unterschied besteht in der Ausgestaltung des Übertragungskolbens 5. In der Ausführung nach Fig. 1 ist es ein Kolben mit gleichbleibendem Durchmesser, während in der Ausführungsform nach Fig. 2 ein Stufenkolben vorgesehen ist.

Da die Ausführungsformen ansonsten identisch sind, werden gleiche Bezugszeichen verwendet.

Die Bremsanlage besteht aus einem Hauptbremszylinder 1, der sich zusammensetzt aus einem Bremsdruckgeber 2 und einer Druckübertragungseinheit 3. Der Bremsdruckgeber 2 besteht aus einem Zylinder mit einem pedalbetätigtem Kolben 4, der im Zylinder einen Druckraum 7 begrenzt.

Die Druckübertragungseinheit 3 besteht aus einem Übertragungskolben 5, der in einem Zylinder dichtend geführt ist, und der mit seiner einen Stirnseite einen Gegendruckraum 6 und mit seiner anderen Stirnseite einen Arbeitsraum 10 begrenzt.

Druckraum 7 und Gegendruckraum 6 stehen über ein Bremsleitungsstück 18′, miteinander in Verbindung. Ein weiteres Bremsleitungsstück 18″ verbindet den Arbeitsraum 10 mit einer Radbremse 31. In dieses Bremsleitungsstück ist ein Einlaßventil 19 angeordnet, das elektromagnetisch betätigt wird und im stromlosen Zustand offen ist. Eine Entlastungsleitung 21 verbindet die Radbremse 31 mit dem Vorratsbehälter 9. In diese Leitung ist ein Auslaßventil 20 angeordnet, das ebenfalls elektromagnetisch betätigt wird und im stromlosen Zustand geschlossen ist.

Eine Nebenleitung 13 verbindet die Radbremse 31 unmittelbar mit dem Druckraum 7. In diese Leitung ist ein Rückschlagventil 14 eingesetzt, das zum Druckraum 7 hin öffnet.

In der dargestellten Grundposition des Übertragungskolbens 5 besteht eine Druckmittelverbindung des Arbeitsraumes 10 zum Vorratsbehälter 9. In der Fig. 1 ist diese Verbindung durch eine Schnüffellochbohrung 8 dargestellt, die durch ein Verschieben des Übertragungskolbens 5 gesperrt wird.

In der Ausführungsform nach Fig. 2 ist eine Längsbohrung 42 im Übertragungskolben 5 vorgesehen, der den Gegendruckraum 6 mit dem Arbeitsraum 10 verbindet. In diesem Kanal ist ein sperrbares Rückschlagventil 43 angeordnet, das zum Gegendruckraum 6 hin sperrt. Der Kanal 42 nimmt weiterhin einen Stift 44 auf, das an den Schließkörper des Rückschlagventils 43 anliegt. Der Stößel 44 ist weiterhin mit einer Membran 45 verbunden, die an den Gegendruckraum 6 anschließt und die auf ihrer anderen Seite einen Raum begrenzt, der mit dem Vorratsbehälter 9 verbunden ist. Eine Feder 46, die auf die Membran und damit auf den Stößel 44 einwirkt, hält den Stößel 44 in Anlage an den Schließkörper des Rückschlagventils 43, so daß der Kanal 42 geöffnet ist. Sobald im Gegendruckraum 6 ein Druck erzeugt wird, verschiebt dieser die Membran 45 gegen die Kraft der Feder 46, so daß der Ventilkörper des Rückschlagventils 43 auf dem ihm zugehörigen Ventilsitz aufsitzt. Das Rückschlagventil 43 kann seine Funktion aufnehmen.

Der Übertragungskolben 5 ist im mittleren Bereich eingeschnürt, so daß sich ein Ringraum 11 ausbildet. Der Ringraum 11 steht über einen Kanal 12 mit dem Vorratsbehälter 9 in Verbindung. Senkrecht zur Bewegungsachse des Übertragungskolbens 5 ist ein Stößel 37 angeordnet, der an der Mantelfläche des Übertragungskolbens 5 anliegt. Auf der anderen Seite des Stößels liegt eine Ventilkugel 33 auf, die von einem Ventilkolben 28 gegen den Stößel gepreßt wird. Die Stirnseite des Ventilkolbens 28, die von der Ventilkugel 33 angewandt ist, begrenzt einen Raum, der mit der Bremsleitung 18′, in Verbindung steht.

Der Stößel ist durch einen Einlaßraum 32 hindurchgeführt, der in einen Ventilsitz 34 mündet. Die Ventilkugel 33 selbst ist im Auslaßraum 36 angeordnet.

Eine Pumpe 23 fördert über eine Leitung 29 in den Einlaßraum 32. Der Auslaßraum 36 steht über eine Leitung 35 mit dem Vorratsbehälter 9 in Verbindung. Der Auslaß der Pumpe 23 steht weiterhin über eine Druckleitung 25 mit der Bremsleitung 18″ in Verbindung. In die Druckleitung 25 ist ein Rückschlagventil 27 eingesetzt, das zur Pumpe hin sperrt.

An der Mantelfläche des Übertragungskolbens 5 ist eine Rampe 40 ausgebildet, die zwei Bereiche 38,39 voneinander trennt. Befindet sich der Stößel 37 im Bereich 38, so hebt er die Ventilkugel 33 von ihrem Dichtsitz 34 ab, so daß die Pumpe 23 in einen offenen Umlauf 29,32,36,35 zum Vorratsbehälter 9 pumpen kann. Befindet sich der Stößel 37 im Bereich 39, so liegt die Kugel auf dem Ventilsitz auf und sperrt den genannten Umlauf.

Die beschriebene Bremsanlage arbeitet nach dem folgenden Schema.

Zur Einleitung einer Bremsung wird das Pedal betätigt, wodurch der Kolben 4 in den Druckraum 7 hineingeschoben wird und das Druckmittel aus dem Druckraum 7 in den Gegendruckraum 6 gelangt. Dies erzwingt eine Bewegung des Übertragungskolbens 5, der das Druckmittel aus dem Arbeitsraum 10 zu den Radbremsen fördert. Es erfolgt eine Druckbeaufschlagung der Radbremsen, wodurch das Rad verzögert und das Fahrzeug abgebremst wird.

Das Drehverhalten des Rades wird ständig überwacht, so daß eine drohende Blockierneigung sofort festgestellt werden kann. Tritt dieser Fall ein, so wird die Pumpe 23 eingeschaltet und die Ventile 19,20 umgeschaltet. Durch das offene Auslaßventil 20 fließt Druckmittel aus der Radbremse 31 in den Vorratsbehälter 9, so daß eine Druckentlastung erfolgt.

Desweiteren sind zwei Fälle zu unterscheiden. Befindet sich zu Beginn der Bremsschlupfregelung der Übertragungskolben 5 in einer Position, die nur wenig von seiner Grundposition verschieden ist, so ist der Stößel 37 noch im Bereich 38. Dies bedeutet, daß der Umlauf geöffnet ist und die Pumpe drucklos in den offenen Umlauf fördert.

Wird nun zum erneuten Druckaufbau in der Radbremse das Ventil 19 geöffnet (nachdem das Ventil 20 geschlossen worden ist), so wird Druckmittel aus dem Arbeitsraum 10 entnommen, wodurch der Übertragungskolben 5 in der Darstellung der Figuren nach links wandert. Das Pedal folgt dieser Bewegung. Diese Bewegung wird solange fortgesetzt, bis der Übertragungskolben 5 eine Position erreicht hat, bei der der Stößel im Bereich der Rampe 40 angelangt ist. Dadurch sperrt das Sperrventil 30, so daß die Pumpe nun über die Druckleitung 25 in den Arbeitsraum 10 fördert. Dadurch wird der Übertragungskolben 5 zurückgesetzt, wodurch das Sperrventil öffnet. Auf diese Weise stellt sich ein Regelvorgang ein, der dafür sorgt, daß im Arbeitsraum 10 ein pedalkraftproportionaler Druck herrscht.

Die andere Möglichkeit besteht darin, daß bei Beginn der Schlupfregelung der Übertragungskolben 5 schon soweit bewegt wurde, daß der Stößel 37 im Bereich 39 ist. Mit Beginn der Schlupfregelung wird die Pumpe eingeschaltet und fördert in den Arbeitsraum 10, wodurch der Kolben nach rechts bewegt wird, bis der Stößel die Rampe 40 erreicht hat und das Ventil geöffnet wird. Es setzt der schon beschriebene Regelvorgang ein.

Zum Druckaufbau in der Radbremse wird das Ventil 19 geöffnet. Dabei kann der Volumenbedarf der Radbremse so groß sein, daß die momentane Förderleistung der Pumpe nicht ausreicht und Druckmittel dem Arbeitsraum 10 entnommen werden muß. Der Übertragungkolben 5 wandert nach links, wodurch das Ventil 30 sofort gesperrt wird und die Pumpe den vollen Druckmittelstrom zu den Radbremsen und den Arbeitsraum 10 fördert.

Auf diese Weise kommt es während einer Bremsschlupfregelung zu einem ständigen Hin- und Herbewegen des Übertragungskolbens 5, was zu einer Zerstörung der Lauffläche des Stößels auf der Mantelfläche des Kolbens führen würde, falls dieser mit einem erheblichen Druck belastet wäre. Dies wird aber dadurch vermieden, daß das System aus Ventilkolben 28 und Ventilkugel 33 druckausgeglichen ist. Es wird somit keine Kraft auf den Stößel 37 übertragen, die an der Mantelfläche abzustützen wäre.

Die Nebenleitung 13 mit dem Rückschlagventil 14 eröffnet die Möglichkeit in einen Regelvorgang einzugreifen, indem die Pedalkraft zurückgenommen wird. Der sich mindernde Druck im Druckraum 7 pflanzt sich unmittelbar in die Radbremse 31 fort.

Damit in der Grundposition der Übertragungskolben 5 eine Verbindung der Radbremsen zum Vorratsbehälter existierte, kann eine Schnüffellochbohrung 8 vorgesehen werden. Es besteht dann allerdings ein kleiner Verlustweg, da die Schnüffellochbohrung zunächst überfahren werden muß, bevor im Arbeitsraum 10 ein Druck aufgebaut werden kann.

Dieser Verlustweg wird vermieden, wenn ein Rückschlagventil 43 vorgesehen wird, das vorzugsweise im Kolben 5 selbst angeordnet ist. Das Rückschlagventil 43 wird von einem Stift 44 in seiner offenen Position gehalten, wobei der Stift 44 wie erläutert an einer Membran 45 angeordnet ist. Sobald im Druckraum 10 und im Gegendruckraum 6 ein Druck aufgebaut wird, bewegt sich die Membran derart, daß der Stößel vom Schließkörper des Rückschlagventils entfernt wird und die Verbindung sperrt. Die zusätzliche Volumenaufnahme durch die Verschiebung der kleinen Membran ist gering.

Bezugzeichenliste:

| | |
|---|---|
| 1 | Hauptbremszylinder |
| 2 | Bremsdruckgeber |
| 3 | Drucküberstragungseinheit |
| 4 | Kolben |
| 5 | Übertragungskolben |
| 6 | Gegendruckraum |
| 7 | Druckraum |
| 8 | Schnüffellochbohrung |
| 9 | Vorratsbehälter |
| 10 | Arbeitsraum |
| 11 | Ringraum |
| 12 | Kanal |

| 13 | Nebenleitung |
| 14 | Rückschlagventil |
| 18' | Bremsleitung |
| 18" | Bremsleitung |
| 19 | Einlaßventil |
| 20 | Auslaßventil |
| 21 | Entlastungsleitung |
| 23 | Pumpe |
| 25 | Druckleitung |
| 27 | Rückschlagventil |
| 28 | Ventilkolben |
| 29 | Leitung |
| 30 | Regelventil |
| 31 | Radbremse |
| 32 | Einlaßraum |
| 33 | Ventilkugel |
| 34 | Ventilsitz |
| 35 | Leitung |
| 36 | Auslaßraum |
| 37 | Stößel |
| 38 | Teilbereich der Mantelfläche |
| 39 | Teilbereich der Mantelfläche |
| 40 | Rampe |
| 42 | Längsbohrung |
| 43 | sperrbares Rcükschlagventil |
| 44 | Stift |
| 45 | Membran |
| 46 | Feder |

**Patentansprüche**

1. Schlupfgeregelte Bremsanlage mit einem Hauptbremszylinder (1), dessen Arbeitsraum (10) in der Bremslösestellung mit einem Vorratsbehälter (9) verbunden ist, mit einer hydraulischen Pumpe (23), deren Saugseite mit dem Vorratsbehälter (9) verbunden ist und deren Druckseite über einen ersten Druckmittelweg (25) mit dem Arbeitsraum (10) verbunden ist, und mit Radbremsen, die über Druckmodulationsventile (19, 20), die von einer Schlupfregeleinrichtung gesteuert sind, entweder an den Arbeitsraum (10) oder an den Vorratsbehälter angeschlossen sind, mit einem zweiten Druckmittelweg (29,35), in die ein Sperrventil (30) eingesetzt ist und die Druckseite der Pumpe (23) mit dem Vorratsbehälter (9) verbindet, wobei das Sperrventil in Abhängigkeit von der Position des Arbeitskolbens geöffnet oder geschlossen ist, dadurch **gekennzeichnet**, daß der Arbeitskolben des Hauptbremszylinders aus einem Kolben (4) und einem Übertragungskolben (5) besteht, wobei zwischen den Kolben (4,5) ein hydraulisches Druckpolster ausgebildet ist, und daß der Schließkörper (33) des Sperrventils (30) im schließenden Sinne vom Druck im Druckpolster und im öffnenden Sinne vom Druck am Ausgang der Pumpe (23) beaufschlagt ist.

2. Bremsanlage nach Anspruch 1, dadurch **gekennzeichnet**, daß das Sperrventil (30) vom Übertragungskolben (5) betätigt wird.

3. Bremsanlage nach Anspruch 1, dadurch **gekennzeichnet**, daß der Übertragungskolben (5) ein Stufenkolben ist, wobei die größere Stirnseite vom Druck im Druckpolster beaufschlagt ist.

4. Bremsanlage nach Anspruch 1, dadurch **gekennzeichnet**, daß der Übertragungskolben (5) eine Längsbohrung (42) aufweist, in die ein Rückschlagventil (43) eingesetzt ist, das zum Arbeitsraum (10) öffnet.

5. Bremsanlage nach Anspruch 4, dadurch **gekennzeichnet**, daß der Schließkörper des Rückschlagventils (43) mit einem in der Bohrung geführten Stift (44) zusammenwirkt, wobei der Stößel an einer Membran (45) befestigt ist, die auf der einen Seite an den Gegendruckraum (6) und auf der anderen Seite an den Vorratsbehälter (9) anschließt.

## Claims

1. A slip-controlled brake system comprising a master brake cylinder (1) whose working chamber (10) communicates with a supply reservoir (9) in the brake's release position, comprising a hydraulic pump (23) whose suction side is connected with the supply reservoir (9) and whose pressure side is connected with the working chamber (10) via a first pressure fluid conduit (25), and comprising wheel brakes which communicate either with the working chamber (10) or with the supply reservoir via pressure-modulation valves (19, 20) controlled by a slip control apparatus, comprising a second pressure fluid conduit (29, 35) in which a shut-off valve (30) is inserted and which connects the pressure side of the pump (23) with the supply reservoir (9), the said shut-off valve being open or closed in dependence on the position of the operating piston, **characterized** in that the working piston of the master brake cylinder is composed of a piston (4) and a transmission piston (5), a hydraulic pressure cushion being formed between the pistons (4, 5), and in that the closure member (33) of the shut-off valve (30) is acted upon by the pressure in the pressure cushion in the closing sense and by the pressure at the outlet of the pump (23) in the opening sense.

2. A brake system as claimed in claim 1, **characterized** in that the shut-off valve (30) is actuated by the transmission piston (5).

3. A brake system as claimed in claim 1, **characterized** in that the transmission piston (5) is a stepped piston, the larger end surface thereof being acted upon by the pressure in the pressure cushion.

4. A brake system as claimed in claim 1, **characterized** in that the transmission piston (5) contains a longitudinal bore (42) into which a non-return valve (43) is inserted which opens towards the working chamber (10).

5. A brake system as claimed in claim 4, characterized in that the closure mmeber of the non-return valve (43) cooperates with a tappet (44) guided in the bore, the tappet being attached to a diaphragm (45) which is adjacent to the counterpressure chamber (6) on the one side and to the supply reservoir (9) on the other side.

## Revendications

1. Système de freinage à régulation du glissement, comprenant un maître-cylindre de frein (1), dont la chambre de travail (10) communique, dans la position de relâchement du frein, avec un réservoir de stockage (9), une pompe hydraulique (23), dont le côté d'aspiration communique avec le réservoir de stockage (9) et le côté de refoulement avec la chambre de travail (10) par un premier trajet d'agent de pression (25), des freins de roues, qui sont raccordés, par des valves de modulation de pression (19, 20) commandées par un dispositif de régulation du glissement, soit à une chambre de travail (10), soit au réservoir de stockage, et un second trajet d'agent de pression (29, 35) dans lequel est montée une valve de blocage (30) et qui fait communiquer le côté de refoulement de la pompe (23) avec le réservoir de stockage (9), la valve de blocage s'ouvrant ou se fermant en fonction de la position du piston de travail, caractérisé en ce que le piston de travail du maître-cylindre de frein est constitué d'un piston (4) et d'un piston de transmission (5), un coussin hydraulique de pression étant réalisé entre ces pistons (4, 5), et en ce que l'élément de fermeture (33) de la valve de blocage (30) est sollicité dans le sens de la fermeture par la pression régnant dans ce coussin de pression et dans le sens de l'ouverture par la pression régnant à la sortie de la pompe (23).

2. Système de freinage suivant la revendication 1, caractérisé en ce que la valve de blocage (30) est actionnée par le piston de transmission (5).

3. Système de freinage suivant la revendication 1, caractérisé en ce que le piston de transmission (5) est un piston étagé, la face frontale la plus grande étant soumise à la pression régnant dans le coussin de pression.

4. Système de freinage suivant la revendication 1, caractérisé en ce que le piston de transmission (5) comporte un perçage longitudinal (42) dans lequel est montée une valve anti-retour (43) s'ouvrant en direction de la chambre de travail (10).

5. Système de freinage suivant la revendication 4, caractérisé en ce que l'élément de fermeture de la valve anti-retour (43) coopère avec une tige (44) guidée dans le perçage, le poussoir étant fixé sur un diaphragme (45) qui est attenant d'un côté à la chambre de contre-pression (6) et communique de l'autre avec le réservoir de stockage (9).

FIG.1

FIG.2